# EUROPÄISCHE PATENTSCHRIFT

(11) **EP 2 793 069 B1**
(45) Veröffentlichungstag und Bekanntmachung des Hinweises auf die Patenterteilung: **31.03.2021**
(21) Anmeldenummer: 14164047.4
(22) Anmeldetag: 09.04.2014
(51) Int. Cl.: G02B 21/24, G02B 21/36

(54) **Digitalmikroskop und Verfahren zur Optimierung des Arbeitsablaufes in einem Digitalmikroskop**
Digital microscope and method for optimising the work process in a digital microscope
Microscope numérique et procédé d'optimisation de la séquence de travail dans un microscope numérique

(30) Priorität: 19.04.2013 DE 102013006994
(43) Veröffentlichungstag der Anmeldung: 22.10.2014
(73) Patentinhaber: Carl Zeiss Microscopy GmbH, 07745 Jena (DE)
(72) Erfinder: GAIDUK, Alexander, Dr., 07749 Jena (DE); STEHR, Dominik, 07743 Jena (DE); RADT, Benno, Dr., 22085 Hamburg (DE); JOCKUSCH, Wolf, 37079 Göttingen (DE); GEIßLER, Enrico, 07749 Jena (DE); WINTEROT, Johannes, 07745 Jena (DE); GNAUCK, Markus, 07749 Jena (DE); KNOBLICH, Johannes, 07747 Jena (DE); FUNCK, Max, 14482 Potsdam (DE)
(74) Vertreter: Müller, Silke

(56) Entgegenhaltungen:
- EP-A1- 1 258 767
- EP-A2- 1 333 306
- WO-A1-2013/015143
- WO-A2-03/009043
- DE-A1-102009 057 886
- JP-A- H0 715 721
- JP-A- S59 192 221
- US-A1- 2002 090 127
- US-A1- 2012 169 862

## Beschreibung

Die Erfindung betrifft ein Digitalmikroskop und ein Verfahren zur Optimierung des Arbeitsablaufes in einem Digitalmikroskop insbesondere zur Verwendung in der Materialmikroskopie und für Anwendungen der Qualitätskontrolle.

In der Mikroskopie werden Makroaufnahmen einer Probe zu Dokumentationszwecken häufig mit einer separaten Kamera oder mit einer geringeren Auflösung aufgenommen. In biomedizinischen Mikroskopanwendungen kann ein Überblicksbild oder Gesamtbild durch Aneinanderfügen (Stitching) vieler mikroskopischer Aufnahmen erzeugt werden. In der Computerdarstellung von geographischen Karten wird häufig ebenfalls ein Überblicksbild verwendet, um dem Benutzer Zusatzinformationen zu liefern.

Aus der WO 19998/044446 A1 ist ein System und ein Verfahren zur Bilddarstellung in einem computergesteuerten Mikroskop bekannt. Hierbei wird zunächst ein Makro-Bild mit niedriger Auflösung aus einzelnen Kacheln erstellt. Mittels der ausgewählten Region dieses Makro-Bildes wird der Probentisch an vordefinierte Stellen verfahren, um das entsprechende hochaufgelöste Bild als Kachel des Gesamtbildes zu erstellen.

Die US 2006 0092505 A1 offenbart kontinuierliche Zoomsystem und Verfahren, welche mehrere optische Pfade und digitale Zoomtechniken verwenden.

Aus der JP 7015721 A ist ein Mikroskopsystem bekannt, das eine Gesamtbildkamera und eine Mikroskopkamera umfasst. Mittels eines Schalters kann zwischen den nebeneinander angeordneten Kameras umgeschaltet werden, die Probe wird entsprechend unter der jeweils ausgewählten Kamera automatisch positioniert.

Die USRE 34622 E1 beschreibt ein mikroskopisches Anzeigesystem, bei dem das Bild in zwei unterschiedlich hoch auflösende optische Pfade geteilt, mittels zweier verschiedener Kameras aufgenommen und auf jeweils einem Monitor dargestellt wird.

Die US 2002/0090127 A1 beschreibt eine Vorrichtung zum schnellen digitalen Erfassen von auf Objektträgern positionierten Proben und einer viele Kacheln (tiles) umfassenden Bildmontage.

Die WO 03/009043 A2 zeigt ein Inspektionssystem für Masken- und Waferinspektion mit einer Beobachtungsoptik, die vereinfacht sein kann, da mittels einer Videokamera eine Übersichtsaufnahme, eine Probenpositionierung und/oder eine Fokussierung vorgenommen werden kann.

WO 2013/015143 A1 zeigt eine Bilderfassungsvorrichtung mit einer Messeinrichtung um die Fokuslage anzupassen.

Bei der Untersuchung von Proben mittels eines Mikroskops muss der Benutzer meist zunächst visuell prüfen, ob die Probe richtig unter dem Objekt platziert ist und beispielsweise den Abstand zwischen Probe und Objektiv einschätzen, um während der Untersuchung eine Kollision zwischen Probe und Objektiv zu vermeiden. Diese Vorab-Prüfung kostet den Nutzer Zeit und kann trotz sorgfältiger Arbeit eine Zerstörung von Optik oder Probe nicht immer sicher verhindern.

Es ist die Aufgabe der Erfindung, ein verbessertes Digitalmikroskop und ein Verfahren bereit zu stellen, die es ermöglichen, den Arbeitsablauf beim Mikroskopieren zu vereinfachen und weitgehend zu automatisieren.

Die Aufgabe wird durch ein Digitalmikroskop mit den Merkmalen des Anspruchs 1 und durch ein Verfahren mit dem Merkmalen das Anspruchs 4 gelöst.

Ein erfindungsgemäßes Digitalmikroskop umfasst zunächst in bekannter Weise eine Optikeinheit und eine digitale Bildverarbeitungseinheit (optical engine), welche an einem schwenkbaren Mikroskopstativ angeordnet sind. Ein Mikroskopbildsensor dient zur Erfassung eines Bildes einer Probe, welche zur Untersuchung auf einem Probentisch platziert wird. Die Funktionen der Optikeinheit und Bilderfassung sind dem Fachmann bekannt , so dass auf diese Details hier nicht näher eingegangen wird.

Erfindungsgemäß umfasst das Digitalmikroskop mindestens einen ersten Überwachungssensor, der als Bildsensor oder Kamera ausgebildet ist, und dessen Überwachungsdaten für die Steuerung verschiedener Funktionen des Arbeitsablaufs beim Mikroskopieren verwendet werden. Es umfasst weiterhin einen zweiten Überwachungssensor, der als Bildsensor oder Kamera ausgebildet ist, und eine Überwachungseinheit zur automatisierten Auswertung der Daten des ersten und zweiten Überwachungssensors. Die Steuerung des Arbeitsablaufes umfasst im Wesentlichen Softwarefunktionen.

Der erste Überwachungssensor dient vorrangig der Beobachtung der Probe, vorzugsweise zur Aufnahme eine zweidimensionalen Übersichtsbildes der Probe. Anhand dieses Übersichtsbildes kann beispielsweise automatisch überprüft werden, ob die Probe auf dem Probentisch korrekt platziert ist. Zur Platzierung der Probe kann anhand des Übersichtsbildes der Objekttisch so lange in X- und Y-Richtung verfahren werden, bis die gewünschte Lage erreicht ist.

Dies ist beispielsweise der Fall, wenn das Übersichtsbild zumindest abschnittsweise mit dem mikroskopischen Bild des ersten Bildsensors ausgerichtet ist. Bekannte Bildverarbeitungsprozesse bieten solche Funktionalitäten.

Das Übersichtsbild bildet weiterhin die Grundlage für eine Navigation "auf" der Probe während des Mikroskopierens, das heißt durch "Zeigen" auf Bereiche im Übersichtsbild und Auswahl einer gewünschten Vergrößerung kann der Probentisch automatisch verfahren und die Optikeinheit entsprechend der Auswahl automatisch eingestellt werden.

Das Übersichtsbild kann als Live-Bild insbesondere für das Ausrichten und Positionieren der Probe verwendet werden. Mit einer Schnappschuss-Funktion ist die Momentaufnahme bestimmter Situationen während des Mikroskopierens in bester Auflösung möglich. Außerdem ist eine Kombination von Live-Bild und Schnappschuss möglich, welche die Automatisierungsfunktion des Live-Bildes mit der besseren Auflösung des Schnappschusses kombiniert.

Es ist also möglich, die Erfassung des Übersichtsbildes und die Erfassung des Mikroskopbildes gleichzeitig oder nacheinander oder alternierend durchzuführen.

Die Vorteile der Erfindung sind insbesondere darin zu sehen, dass auf einfache und effektive Weise der automatisierte Arbeitsablauf beim Mikroskopieren und die Bedienung des Mikroskops erheblich vereinfacht werden kann.

Ein erfindungsgemäßes Verfahren dient zur Optimierung des Arbeitsablaufes in einem Digitalmikroskop, das eine Optikeinheit, eine digitale Bildverarbeitungseinheit sowie einen ersten und einen zweiten Überwachungssensor umfasst die als Bildsensor oder Kamera ausgebildet sind, wobei der zweite Überwachungssensor räumlich versetzt zum ersten Überwachungssensor im Digitalmikroskop angeordnet ist. Es werden zunächst bei der Beobachtung einer auf dem Probentisch angeordneten Probe oder bei der Beobachtung des Probentisch oder bei der Beobachtung der Optikeinheit oder bei der Beobachtung eines Benutzers erste Beobachtungsdaten des ersten und des zweiten Überwachungssensors erfasst und ein dreidimensionales Überblicksbild oder eine Höhenkarte der Probe erzeugt.

Diese ersten und zweiten Beobachtungsdaten werden automatisch analysiert und ausgewertet und daraus Steuerdaten generiert.

Die Steuerdaten werden zur Ansteuerung verschiedener Komponenten, also zur Steuerung des Arbeitsablaufes des Digitalmikroskops verwendet.

Die ersten Beobachtungsdaten sind ein zweidimensionales Übersichtsbild, das - wie oben bereits beschrieben - verwendet wird.

In einer vorteilhafte Ausführungsform der Erfindung umfasst das Digitalmikroskop neben dem zweiten weitere Überwachungssensoren. Der erste Überwachungssensor und der zweite Überwachungssensor sind an räumlich verschiedenen Orten am Digitalmikroskop angeordnet. Damit ist es vorteilhafterweise möglich, die Daten des ersten und des zweiten Überwachungssensors in der Überwachungseinheit zu einer dreidimensionalen Überblicksinformation zu verarbeiten.

Die einzelnen weiteren Überwachungssensoren sind als Bildsensoren oder Kameras ausgeführt und an unterschiedlichen räumlichen Orten im Digitalmikroskop angeordnet.

Die dreidimensionale Überblicksinformation kann zur Beurteilung einer Z-Topologie, also einer Höheninformation der Probe verwendet werden. Diese Information wiederum wird vorteilhafterweise verwendet, um Autofokusfunktionen des Digitalmikroskops zu unterstützen und/oder eine grobes dreidimensionale Übersichtsbild zu erstellen.

Bei der Verwendung eines dritten Überwachungssensors kann auf einfache Weise zusätzlich eine Kollisionskontrolle realisiert werden. Diese kann beispielsweise bei einer Bewegung des Probentisches oder einer Bewegung der Optikeinheit aktiv sein und den jeweiligen Vorgang bei Kollisionsgefahr unterbrechen.

Dieser dritte oder weitere Überwachungssensoren können anstelle von Bildsensoren auch kapazitive, resistive, ultraschall-, infrarot- oder sonstige geeignete Sensoren sein.

Beispielsweise könnte ein Berührungssensor die Berührung des Probentisches während dessen Bewegung oder während der Bewegung der Optikeinheit erfassen und ggf. die entsprechende Bewegung gestoppt werden, wenn Kollisionsgefahr besteht. Der Fachmann wird mögliche Abwandlungen erkennen und die jeweils nötige Konfiguration und Sensorauswahl entsprechend anpassen.

Selbstverständlich ist die Kombination verschiedenartiger Überwachungssensoren für alle möglichen Arbeitsablauf-Erleichterungen denkbar und von dieser Erfindung mit umfasst. Der erste, zweite und ggf. weitere Überwachungssensoren können unterschiedlich ausgeführt und in den Arbeitsablauf eingebunden sein. Dabei ist es nicht erforderlich, dass bei mehreren Sensoren alle dieselbe Konfiguration und Ausführung aufweisen.

Die Bildsensoren oder Kameras können
- jeweils einen "eigenen" Bildverarbeitungsprozessor aufweisen,
- Beobachtungsdaten (Bildinformationen) zur Weiterverarbeitung im Haupt-Media-Prozessor bereitstellen,
- Beobachtungsdaten (Bildinformationen) zur Weiterverarbeitung in einer digitalen programmierbaren Logik (Main-FPGA) des Digitalmikroskops bereitstellen, oder
- Beobachtungsdaten (Bildinformationen) in einem "eigenen" FPGA) auswerten.

Eine andere vorteilhafte Ausführungsform eines Digitalmikroskops umfasst weiterhin eine Zusatzbeleuchtungseinrichtung.

Diese kann eine separate Beleuchtungseinrichtung sein, die beispielsweise mittels LED oder OLED eine kontinuierliche Beleuchtung erzeugt.

Es ist aber ebenso die Verwendung eines Blitzlichtes möglich, die vorteilhafterweise eine energiesparende Beleuchtung eines großen Bereiches - synchronisiert mit der Bildaufnahme - ermöglicht.

Eine weitere Alternative bzw. Variante für die Zusatzbeleuchtungseinrichtung ist eine strukturierte Beleuchtung, beispielsweise eine Laser- oder LED-Zeilenprojektion oder eine speziell auf die Probe, die Anwendung, den Mikroskop-Kontrast oder weitere Merkmale abgestimmte Musterprojektion. Dies kann zur Erzeugung von 3D-Profilinformationen der Probe und zur Abstandsbestimmungen zu bestimmten Bereichen hilfreich sein.

Ebenso ist eine Beleuchtung in verschiedenen Sequenzen für verschiedene Messaufgabe möglich, beispielsweise kann mittels Laufzeitbestimmungen der Abstand zu einer Probe oder eine Abstandskarte eines Gebietes sehr genau bestimmt werden.

All die vorgenannten Optionen und Variationen können den erforderlichen Messaufgaben und Mikroskopkonfigurationen angepasst werden.

Die Funktion des Überwachungssensors wird effizient in den automatisierten Arbeitsablauf des Digitalmikroskops eingebunden. In Abhängigkeit von einer speziellen individuellen Konfiguration sind verschiedene Level der Integration in die Hard- und Software des Digitalmikroskops erforderlich. Wenn beispielsweise eine Neupositionierung oder sequentiell veränderte Position der Probe zur Erstellung des Überblicksbildes oder des Mikroskopbildes erforderlich ist, muss die Bewegung des Probentisches in der Steuereinrichtung des Digitalmikroskops entsprechend eingebunden sein.

Nachfolgend werden beispielhaft zwei möglich Arbeitsabläufe genannt, die mit einem erfindungsgemäßen Digitalmikroskop durchgeführt werden können.
- Arbeitsablauf 1: "Start und Einstellen des kleinsten Blickfeldes"
- Arbeitsablauf 2:"Suche ein anderes mikroskopisches Blickfeld in derselben mikroskopischen Vorschau"

Ein anderer Arbeitsablauf zur Erzeugung eines Bildes in einem anderen Bereich umfasst die grundlegenden Schritte
- Auswahl eines anderen Zentrums im Überblicksbild
- Neupositionierung der Probe
- Bildaufnahme

Dieses in der Tabelle 1 dargestellte Beispiel zeigt eine möglich Abfolge von Schritten in einem Arbeitsablauf von Anschalten des Digitalmikroskops bis zur Bildaufnahme. Es sind alle Nutzeraktionen und automatische Aktionen des Digitalmikroskops angegeben.

**Tabelle 1**

| **Anwendungsschritt** | **Interner Schritt (Steuerdaten)** | **Details** |
|---|---|---|
| Ausrichtung der Komponenten | Höchste Z-Position der Optikeinheit einstellen | |
| | niedrigste z-Position des Probentisches einstellen | |
| | Abstand zwischen Optikeinheit und Probentisch ist 245mm | |
| | Verfahren des Probentisches in XY- | für 130x100mm Probentisch: X=65mm, Y=0mm |
| | Position für den Überblick | für 150x100mm Probentisch: X=75mm, Y=0mm |
| start live Überblick | Beleuchten des Überblicksgebietes | Beleuchtung Überblick ON Beleuchtung Hauptsensor OFF |
| | Beschneiden des Überblicksbildes auf 130x100mm | Sichtbarer Bereich bei 245mm Abstand: 260x200mm Proben bis 125mm Höhe darstellbar. |
| | Darstellen des Überblicksbildes im live Modus | Minimale sinnvolle Auflösung des Sensors (für max. Geschwindigkeit) |
| Probe auflegen | Platzieren der Probe auf dem Probentisch | |
| | Ausrichten der Probe unter Verwendung des live-Überblicksbildes | |
| Aufnehmen des Überblicksbildes | Umschalten auf maximale Auflösung des Bildsensors | 8MP@1.5fps "Standbildmodus" |
| | Option1: | Option A: |
| | manuelle Fokussierung des Bildsensors | Bildstapel Aufnehmen durch Fokusvariation Erzeugen EDoF(Extended Field of Depth)-Bild |
| | | Option B: |
| | | Bildstapel Aufnehmen durch Verfahren der Optikeinheit Erzeugen EDoF-Bild. |
| | | Option C: |
| | | verschiedene Überblicksbilder für verschiedene XY-Positionen des Objekttisches für Stereogrammetrie. verringerte DoF |
| | | Option D: |
| | | manuelle Einstellung des Fokus durch Bediener und Aufnahme des Überblicksbildes |
| | | Option E: |
| | | Fokussierung des Bildsensors etwa 20mm über Objektebene. (=225mm von Optikeinheit) |
| | Option2: | Option A: |
| | AF (Autofokus) des Bildsensors | standard AF Algorithmus des Bildsensors in vordefinierten Bereichen verwenden. AF und Bildaufnahme. |
| | | Option B: |
| | | Benutzer-Interaktion mit live-Überblicksbild zur Auswahl eines POI (Point Of Interest) AF auf POI und Bildaufnahme. |
| | Benutzerauswahl zwischen Einzelbild und EDoF | |
| | Verzerrungskorrektur des Überblicksbildes | Option A: |
| | | interne Korrekturoption des Bildsensors (z. B. SONY) |
| | | Option B: |
| | | Verwendung eines speziellen Modells (simple openCV algorithm by Amplify) |
| | | Option C: |
| | | Verwende bekannten Zeiss Korrektur-Algorithmus |
| | Übertragen des Überblicksbildes a das GUI | |
| Koordinatensystem bestimmen | Option1: | |
| | benutzerdefiniert | |
| | Option2: auf den | |
| | Objekttisch bezogen | |
| Mikroskopaufnahme | Beleuchtung für HauptSensor einschalten | Beleuchtung Überblick OFF Beleuchtung Hauptsensor ON |
| | | 0.5x: Ringlicht 100% |
| | | 1.6x: Ringlicht 50% |
| | | 5x: Hellfeld 20% |
| | Bewegung des Probentisches zur Ausrichtung mit der optischen Achse der Optikeinheit | Zentrumspunkt des Überblicksbildes Überlagern mit Zentrumspunkt der mikroskopischen Ansicht für 130x100mm Probentisch: X=65mm, Y=50mm für 150x100mm Probentisch: X=75mm, Y=50mm |
| | Bewegung des Probentisches in Z-Richtung (vertikal) | zum Pivot-Punkt |
| | | In beliebige Z-Position zur Fokussierung |
| | | Niedrigste z Position |
| | | 0.5x: zum Pivot-Punkt |
| | | 1.6x: zum Pivot-Punkt |
| | | 5x: zum Pivot-Punkt |
| | Digital Einzoomen in Überblicksbild zur Herstellung der korrekten Beziehung zwischen den dargestellten Bildern | Übersichts-BildFläche:Mikroskop-BildFläche= 1:3 |
| Fokus | Option1: OE (Objektebene), AF (Autofokus) | Grob-Software-AF mit geringster Vergrößerung und geringster Blendenöffnung |
| | | Grob-Software-AF mit geringster Vergrößerung und größter Blendenöffnung |
| | | Fein-Software-AF mit größter Blendenöffnung |
| | Option2: OE manuell + AF mit Software | Live-Überblick |
| | | Grob-Fokus mit mikroskopischem Bild |
| | | Fein-Software-AF mit größter Blendenöffnung |
| | Option3: OE AF in OE hardware | Grob-Hardware-AF mit geringster Vergrößerung und geringster Blendenöffnung |
| | | Grob-Hardware-AF mit geringster Vergrößerung und größter Blendenöffnung |
| | | Fein-Hardware-AF mit größter Blendenöffnung |
| | Option4: OE manuell durch Benutzer + AF in Software | Manuelle Bewegung OE zur Annäherung der Probe an AF |
| | | Fein-Software-AF mit Blende entsprechend der ZoomEinstellung |
| Finden der PivotPunkt-Ebene | Wenn die Fokussierung erreicht ist, kann die Probe zur Schwenkebene bewegt werden | Bewegen von OE und Probentisch die gleiche Strecke in Richtung der Schwenkebene |

Anhand der Figuren werden nachfolgend einige bevorzugte Ausführungsformen der Erfindung näher erläutert.

Es zeigen:
- Fig. 1:: eine schematische Darstellung einer bevorzugen Anordnung von mehreren Überwachungssensoren an einem Digitalmikroskop;
- Fig. 2:: eine schematische Darstellung eines Digitalmikroskops mit verschiedenen Überwachungssensoren;
- Fig. 3:: eine Darstellung von Platzierungsmöglichkeiten eines ersten Überwachungssensors in einem Digitalmikroskop;
- Fig. 4:: eine Darstellung von Platzierungsmöglichkeiten eines ersten und eines zweiten Überwachungssensors, sowie einer Zusatzbeleuchtungseinrichtung in einem Digitalmikroskop;
- Fig. 5:: eine weitere schematische Darstellung einer Platzierungsmöglichkeit eines Überwachungssensors;
- Fig. 6:: eine Darstellung von Platzierungsmöglichkeiten eines ersten Überwachungssensors in einem inversen Digitalmikroskop;
- Fig. 7:: eine schematische Darstellung optischer Pfade bei unterschiedlicher Anordnung eines ersten Überwachungssensors in einem Digitalmikroskop;
- Fig. 8:: eine Sammlung verschiedener Überblicksbilder;
- Fig. 9:: verschiedene Überblicksbilder mit verschiedener Schärfentiefe;
- Fig. 10:: einen beispielhaft dargestellten Arbeitsablauf in einem erfindungsgemäßen Digitalmikroskop;
- Fig. 11:: beispielhafte dreidimensionale Überblicksbilder;
- Fig. 12:: Größenverhältnisse von Überblicksbild und Mikroaufnahmen verschiedener Objektive, die in voller Sensorauflösung erfassbar sind;
- Fig. 13:: eine Prinzipskizze einer besonders bevorzugten Ausführungsform eines Digitalmikroskops.

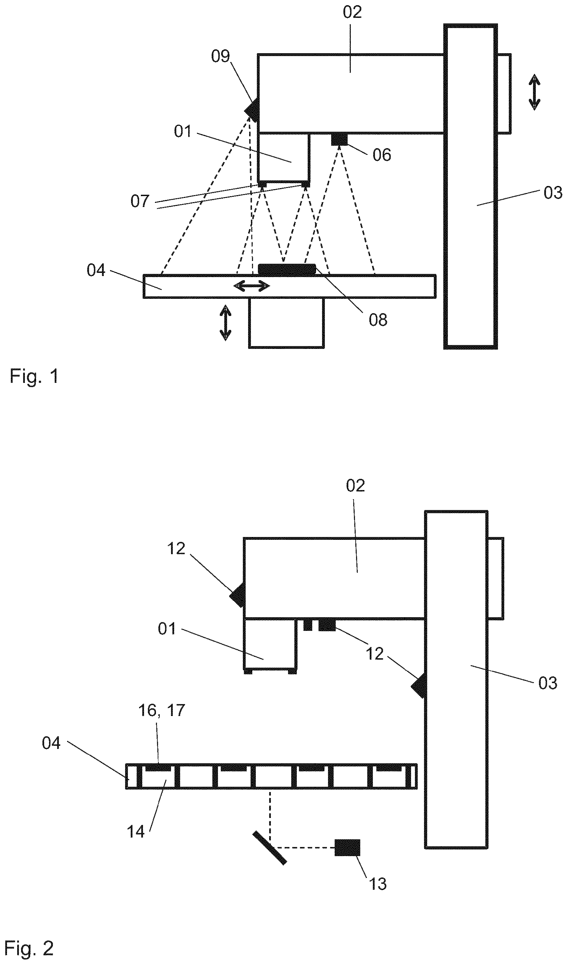

In Fig. 1 ist eine schematische Darstellung eines Digitalmikroskops gezeigt. Das Digitalmikroskop umfasst ein Objektiv 01, eine höhenverstellbare Optikeinheit 02, ein vorzugsweise schwenkbares Mikroskopstativ 03 und einen Probentisch 04. Der Probentisch 04 ist in bekannter Weise in einer horizontalen Ebene und senkrecht dazu verfahrbar.

Das Digitalmikroskop umfasst erfindungsgemäß einen ersten als Bildsensor 06 (vorzugsweise Kamerasensor) ausgeführten Überwachungssensor, der an der Optikeinheit 02 angeordnet und auf den Probentisch 04 gerichtet ist. Mithilfe von Beobachtungsdaten des Bildsensors 06 wird in einer in die Optikeinheit integrierten, nicht dargestellten Überwachungseinheit ein Überblicksbild erzeugt.

Ein zweiter Überwachungssensor, der in dieser Ausführungsform durch zwei am Objektiv 01 angeordneten Bildsensoren 07 gebildet ist, kann beispielsweise als zweite Beobachtungsdaten eine live-Referenz über die Position des Probentisches 04 liefern. Dazu kann entweder eine Stelle innerhalb einer Probe 08 oder beispielsweise auch der Ort eines nicht dargestellten Beleuchtungsspots beobachtet werden. Alternativ können genau ein oder mehr als zwei Sensoren über den Umfang des Objektivs verteilt angeordnet sein.

Ein weiterer Bildsensor 09 dient als dritter Überwachungssensor zur Beobachtung der Umgebung des Probentisches 04. Die dritten Beobachtungsdaten können in diesem Fall ausgewertet werden, um festzustellen, ob ein Benutzer gerade mit einer oder den Hände im Bereich des Probentisches oder des Objektives hantiert.

In Fig. 2 ist gezeigt, dass nicht nur Bildsensoren als Überwachungssensoren verwendet werden können. Fig. 2 zeigt in einer schematischen Darstellung ein Digitalmikroskop mit den zuvor genannten Grundbestandteilen.

Einer erster, ein zweiter und ein dritter Überwachungssensor sind hierbei als Überblickskameras 12 an verschiedenen Stellen (Stativ 03, Optikeinheit 02) im Digitalmikroskop angebracht. Im Fall eines inversen Mikroskops kann selbstverständlich auch eine Überblickskamera 13 unterhalb des Probentisches 04 vorgesehen sein. Auf dem Probentisch 04 können weiterhin Überwachungssensoren als Infrarotsensoren 14, kapazitive oder resistive Sensoren 16, 17 vorgesehen sein, deren Überwachungsdaten in der Überwachungseinheit zur Überwachung des Arbeitsablaufes beim Mikroskopieren ausgewertet werden.

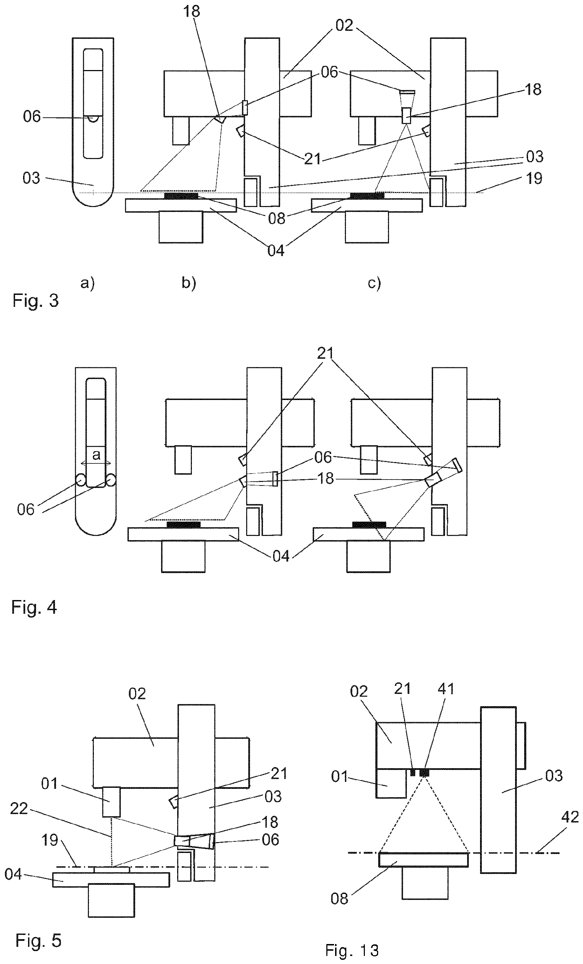

In den Fig. 3 bis 6 sind Varianten für die Platzierung des zumindest ersten Überwachungssensors im Digitalmikroskop dargestellt. Auch wenn hier jeweils ein Bildsensor 06 oder Kamerasensor beschrieben wird, so soll die Erfindung nicht auf diesen Sensortyp beschränkt sein. Die Bildsensoren 06 weisen in diesen Ausführungsformen jeweils eine zusätzliche Optikbaugruppe 18 auf.

Dabei zeigt Fig. 3 die Platzierung des Bildsensors 06 mittig in der Optikeinheit 02 (Abb. a)-Ansicht von der Seite auf das Mikroskopstativ 03). In Abbildung b) ist der Bildsensor 06 schräg auf eine Objektebene 19 gerichtet, so dass bezüglich einer durchweg scharfen Abbildung der Objektebene eine "Scheimpflug"-Kamera dimensioniert werden muss. Abb. c) zeigt den senkrecht auf die Objektebene 19 gerichteten Bildsensor 06. Eine Zusatzbeleuchtungseinrichtung 21 ist jeweils im Mikroskopstativ 03 vorgesehen.

In Abb. a) der Fig. 4 ist zu erkennen, dass zwei Bildsensoren 6 in einem Abstand a zueinander im Mikroskopstativ 03 angeordnet sind. Der Abstand a kann in einer bevorzugten Ausführungsform 120 mm betragen. Auch hier ist die Zusatzbeleuchtungseinrichtung 21 im Mikroskopstativ 03 angeordnet. Gemäß Abb. b) ist eine "Scheimpflug"-Kamera dimensioniert, während der Bildsensor 06 gemäß Abb. c) einen "normalen" Überblick erzeugt.

Fig. 5 zeigt die Anordnung des Bildsensors 06 im Mikroskopsativ 03, wobei eine Beobachtungsebene 22 senkrecht zur Objektebene 19 ausgerichtet ist.

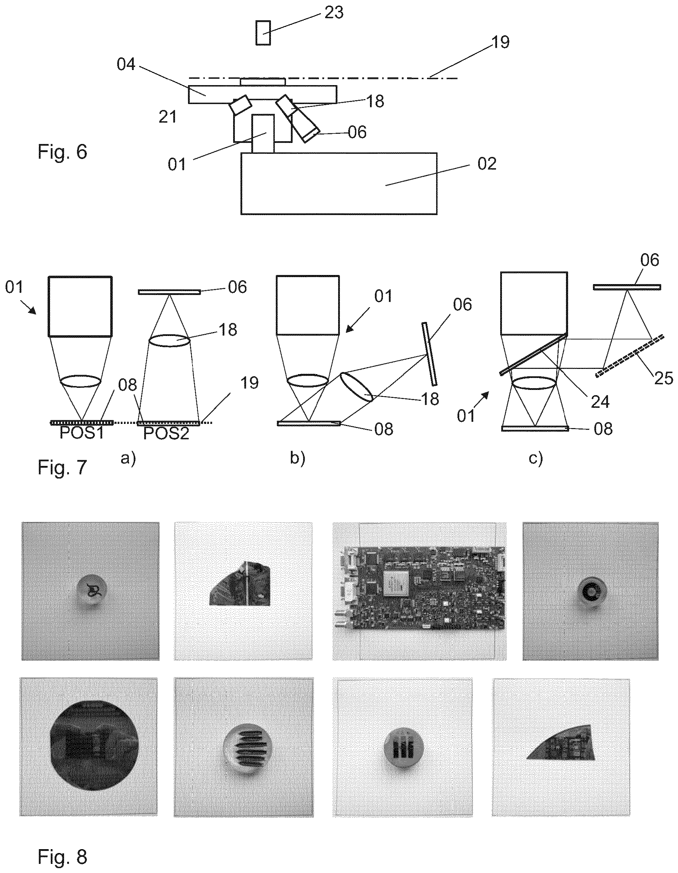

In Fig. 6 ist eine Sensoranordnung in einem inversen Mikroskop mit einer Durchlichtbeleuchtungseinrichtung 23 gezeigt. In diesem Fall ist der als Bildsensor 06 mit Optikbaugruppe 18 ausgeführte Überwachungssensor im Probentisch 04 angeordnet.

Fig. 7 zeigt in einer schematischen Darstellung verschiedene Anordnungen der optischen Elemente des Digitalmikrokops. In Abb. b) ist eine Optikanordnung gezeigt, bei der die Probe 08 für die Erzeugung des Übersichtsbildes in eine zur Objektivposition POS1 unterschiedliche Position POS2 verfahren werden muss. Abb. b) kann die Anordnung einer "Scheimpflug"-Kamera entnommen werden, während Abb. c) eine Anordnung zeigt, bei der keine zusätzliche Optikbaugruppe erforderlich ist. Eine Bildumlenkeinrichtung kann in der Optikeinheit integriert sein und umfasst ein Planglas 24 und einen weiteren Umlenkspiegel 25. In diesem Fall wird das vorn der Probe reflektierte Licht über das Planglas 24 zur nicht dargestellten Bildaufnahmeeinheit und über die Bildumlenkeinrichtung zum Bildsensor 06 gelenkt.

Fig. 8 zeigt Beispiele von Überblicksbildern eines Bildsensors als ersten Überwachungssensor innerhalb eines Blickfeldes von 150x150mm.

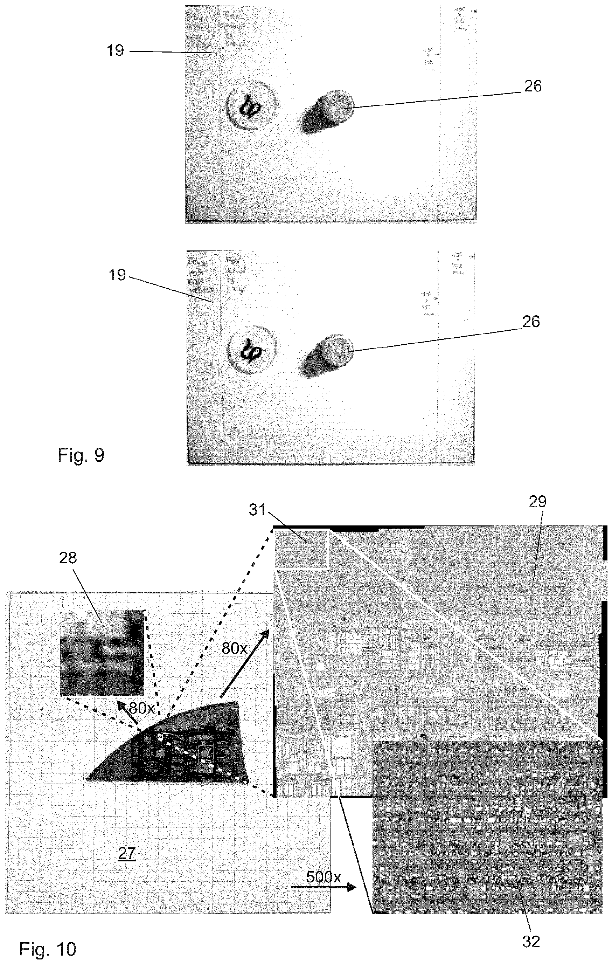

Fig. 9 zeigt beispielhafte Überblicksbilder mit einer Variation der Schärfentiefe (DoF) und einer Fokussierung auf verschiedenen Höhenlevel. in Abb. a) ist die Probenebene 19 außerhalb des Fokus und die Oberfläche des Objektes 26 im Fokus, während in Abb. b) die Probenebene 19 fokussiert ist.

In Fig. 10 sind Darstellungen eines möglichen Arbeitsablaufs gezeigt. Beginnend vom makroskopischen Übersichtsbild 27 wird 80-fach in das Übersichtsbild 27 eingezoomt (Bild 28). In 80-facher Vergrößerung gelangt man zu einer Mikroansicht 29, die aus zusammengesetzten Mikrobildern mit 1µm Auflösung besteht. Durch Auswahl eines Bereiches 31 in der Mikroansicht 29 und dessen Vergrößerung gelangt der Benutzer zum mikroskopischen Bild 32 in 500-facher Vergrößerung. Es erfolgt per Software mittels Photogrammetrie bzw. Stereogrammetrie eine Rekonstruktion der dreidimensionalen Eigenschaften der Probe 33. Die hierfür verwendeten Algorithmen sind dem Fachmann bekannt.

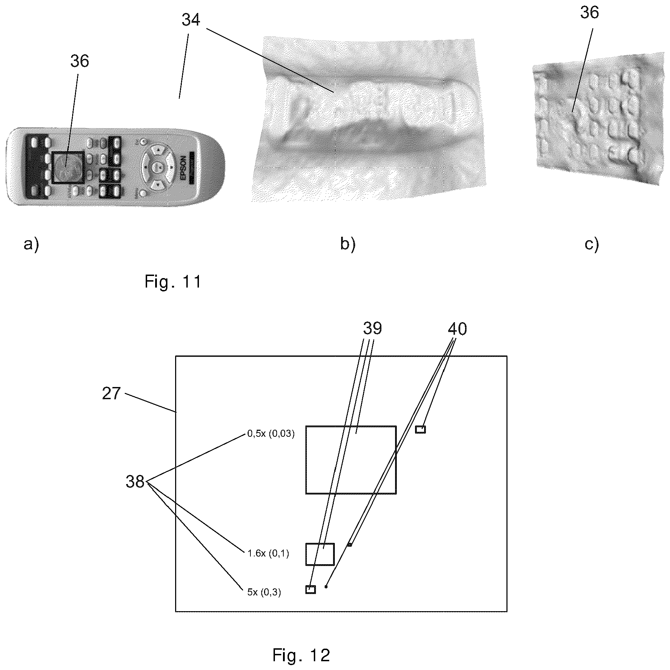

In Fig. 11 ist ein Beispiel für ein mittels Stereogrammetrie erzeugtes dreidimensionales Übersichtsbild gezeigt. Abb. a) zeigt ein zweidimensionales Bild einer Fernbedienung 34 mit einem eingerahmt dargestellten Bereich 36 (ROI - region of interest). Mittels eines Stereogrammetrie-Algorithmus wurde eine Höhenkarte der Fernbedienung 34 erstellt (Abb. b)). Abb. c) zeigt einen Zoom in die Höhenkarte. Trotz einiger Unsicherheiten in der Topologie ist die Identifikation von Details mit einer Tiefe von kleiner als 1mm (ROI) möglich.

Fig. 12 stellt die in voller Auflösung darstellbaren Mikroskopbilder verschiedener Objektive 38 mit verschiedenen Vergrößerungen (5x, 1,6x, 0,5x) und verschiedenen korrespondierenden numerischen Aperturen (NA=0,03, 0,1, 0,3) im Verhältnis zum Übersichtsbild 27 dar. Dabei zeigt das jeweils linke Mikroskopbild 39 den minimalen Zoom, während das jeweils rechte Mikroskopbild 40 die mit maximaler Vergrößerung bei voller Auflösung des ersten Bildsensors darstellbare Fläche bei einer Ausdehnung des Übersichtsbildes, bzw. der mit dem Überblickssensor darstellbaren Fläche des Probentisches von 130x100mm zeigt.

Fig. 13 zeigt in schematischer Darstellung eine besonders bevorzugte Anordnung eines Digitalmikroskops mit einem als Kamera 41 ausgeführten ersten Überwachungssensor. Die Kamera 41 und die Zusatzbeleuchtungseinrichtung sind dabei an einer Unterseite der Optikeinheit 02 neben dem Objektiv 01 angeordnet. Das Mikroskopstativ 03 ist in bekannter Weise um eine Schwenkachse 42 schwenkbar. Zu dieser Schwenkachse 42 kann der Probentisch 08 ausgerichtet werden (Pivotpunkt des Probentisches 08).

**Bezugszeichenliste**

| | | | |
|---|---|---|---|
| 01 | Objektiv | 29 | Mikroansicht |
| 02 | Optikeinheit | 30 | - |
| 03 | Stativ | 31 | Bereich |
| 04 | Probentisch | 32 | mikroskopisches Bild |
| 05 | - | 33 | Probe |
| 06 | Bildsensor | 34 | Fernbedienung |
| 07 | Bildsensor | 35 | - |
| 08 | Probe | 36 | Bereich (ROI) |
| 09 | Bildsensor | 37 | Schärfeebene |
| 10 | - | 38 | Objektiv |
| 11 | - | 39 | Mikroskopbild |
| 12 | Überblickskamera | 40 | Mikroskopbild |
| 13 | Überblickskamera | 41 | Kamera |
| 14 | Infrarotsensor | 42 | Schwenkachse |
| 15 | - | | |
| 16 | kapazitiver Sensor | | |
| 17 | resisitiver Sensor | | |
| 18 | Optikbaugruppe | | |
| 19 | Probenebene | | |
| 20 | - | | |
| 21 | Zusatzbeleuchtungseinrichtung | | |
| 22 | Beobachtungsebene | | |
| 23 | Durchlichtbeleuchtungseinrichtung | | |
| 24 | Planglas | | |
| 25 | Umlenkspiegel | | |
| 26 | Objekt | | |
| 27 | makroskopisches Übersichtsbild | | |
| 28 | Bild | | |

## Patentansprüche

1. Digitalmikroskop mit
- einer Optikeinheit (02) und einer digitalen Bildverarbeitungseinheit, welche an einem schwenkbaren Mikroskopstativ (03) angeordnet sind, und mit
- einem Mikroskopbildsensor zur Erfassung eines mikroskopischen Bildes einer auf einem Probentisch (04) anzuordnenden Probe (08),
- mindestens einen ersten Überwachungssensor, der als Bildsensor (06) oder Kamera (41) zur Erfassung eines zweidimensionalen Übersichtsbildes (27) der Probe (08) ausgebildet ist;
- eine Überwachungseinheit, wobei in der Überwachungseinheit Daten des ersten Überwachungssensors automatisiert ausgewertet werden,
- einem zweiten Überwachungssensor, der ein Bildsensor (06, 07, 08) oder eine Kamera (41) zur Erfassung eines Übersichtsbildes ist, wobei der erste Überwachungssensor und der zweite Überwachungssensor an räumlich verschiedenen Orten am Digitalmikroskop angeordnet sind,
**dadurch gekennzeichnet, dass** es
- die Daten beider Überwachungssensoren in der Überwachungseinheit zu einer dreidimensionalen Überblicksinformation verarbeitet werden, welche zur automatischen Steuerung eines Arbeitsablaufes des Digitalmikroskops herangezogen werden, wobei der Arbeitsablauf zumindest die Steuerung des Probentisches (04) und/oder die Steuerung der Optikeinheit (02) umfasst.

2. Digitalmikroskop nach Anspruch 1, **dadurch gekennzeichnet, dass** es einen dritten Überwachungssensor umfasst, wobei der erste Überwachungssensor und der dritte Überwachungssensor an räumlich verschiedenen Orten am Digitalmikroskop angeordnet sind und die Daten des ersten und des dritten Überwachungssensors in der Überwachungseinheit zu einer Kollisionskontrollinformation verarbeitet und in den Arbeitsablauf des
Digitalmikroskopes integriert werden.

3. Digitalmikroskop nach einem der Ansprüche 1 oder 2,
**dadurch gekennzeichnet, dass** es weiterhin eine Zusatzbeleuchtungseinrichtung (21) umfasst.

4. Verfahren zur Steuerung eines Arbeitsablaufs in einem Digitalmikroskop mit einem Mikroskopbildsensor zur Erfassung eines Mikroskopbildes, einer Optikeinheit (02) und mit einer Kamera oder einem Bildsensor als einem ersten Überwachungssensor, folgende Schritte umfassend:
- Erfassung eines ersten Übersichtsbildes einer auf einem Probentisch (04) angeordneten Probe (08) mittels des ersten Überwachungssensors ;
- Erfassung eines zweiten Übersichtsbildes mittels eines zweiten Überwachungssensors, welcher räumlich versetzt zum ersten Überwachungssensor im Digitalmikroskop angeordnet ist;
- Erzeugung eines dreidimensionalen Überblicksbildes oder einer Höhenkarte der Probe aus den ersten und zweiten Beobachtungsdaten;
- automatische Analyse und Auswertung der Beobachtungsdaten des ersten und zweiten Überwachungssensors und Erzeugung von Steuerdaten;
- Verwendung der Steuerdaten zur Steuerung des Arbeitsablaufs des Digitalmikroskops, wobei der Arbeitsablauf zumindest die Steuerung des Probentisches (04) und/oder die Steuerung der Optikeinheit (02) umfasst.

5. Verfahren nach Anspruch 4 , **dadurch gekennzeichnet, dass** der Arbeitsablauf ein Navigieren auf der Probe umfasst, wobei durch Zeigen auf Bereiche im Übersichtsbild und Auswahl einer gewünschten Vergrößerung Steuerdaten zum Verfahren des Probentisches und zur Einstellung der Optikeinheit und zur Aufnahme eines Mikroskopbildes erzeugt werden.

6. Verfahren nach einem der Ansprüche 4 oder 5, **dadurch gekennzeichnet, dass** die ersten Beobachtungsdaten zur Weiterverarbeitung in einer digitalen programmierbaren Logik des Digitalmikroskopes bereitgestellt werden.

7. Verfahren nach einem der Ansprüche 5 bis 6, weiterhin folgende Schritte umfassend:
- Verwendung der ersten und zweiten Beobachtungsdaten für eine Grobpositionierung des Probentisches (04) und/oder
- Verwendung der ersten und zweiten Beobachtungsdaten für eine automatische Einstellung eines Fokus des Objektivs (01) .

8. Verfahren nach einem der Ansprüche 4 bis 7, **dadurch gekennzeichnet, dass** weiterhin während der Erfassung der Beobachtungsdaten eine Beleuchtung des Probentisches (04) erfolgt.

9. Datenverarbeitungsprogramm zur Durchführung eines Verfahrens nach Anspruch 4 zur Steuerung eines Arbeitsablaufes in einem Digitalmikroskop nach Anspruch 1, welches Steuerdaten zur Steuerung des Probentisches und/oder der Optikeinheit des Digitalmikroskopes erzeugt.

## Claims

1. Digital microscope, having
- an optics unit (02) and a digital image processing unit, which are arranged at a pivotable microscope stand (03),
and having
- a microscope image sensor for capturing a microscopic image of a sample (08) to be arranged on a sample stage (04),
- at least one first monitoring sensor embodied in the form of an image sensor (06) or a camera (41) for capturing a two-dimensional overview image (27) of the sample (08);
- a monitoring unit, wherein data of the first monitoring sensor are evaluated automatically in the monitoring unit,
- a second monitoring sensor, which is an image sensor (06, 07, 08) or a camera (41) for capturing an overview image, wherein the first monitoring sensor and the second monitoring sensor are arranged at the digital microscope at spatially different locations,
**characterized in that**
- the data of both monitoring sensors are processed in the monitoring unit to produce three-dimensional overview information that is used to automatically control a workflow of the digital microscope, wherein the workflow comprises at least controlling the sample stage (04) and/or controlling the optics unit (02).

2. Digital microscope according to Claim 1, **characterized in that** it comprises a third monitoring sensor, wherein the first monitoring sensor and the third monitoring sensor are arranged at the digital microscope at spatially different locations and the data of the first and the third monitoring sensors are processed in the monitoring unit to produce collision control information and are integrated in the workflow of the digital microscope.

3. Digital microscope according to either of Claims 1 and 2, **characterized in that** it furthermore comprises an additional illumination device (21).

4. Method for controlling a workflow in a digital microscope having a microscope image sensor for capturing a microscope image, an optics unit (02) and having a camera or an image sensor as a first monitoring sensor, comprising the following steps:
- capturing a first overview image of a sample (08) arranged on a sample stage (04) by means of the first monitoring sensor;
- capturing a second overview image by means of a second monitoring sensor, which is arranged in the digital microscope spatially offset with respect to the first monitoring sensor;
- generating a three-dimensional overview image or a height map of the sample from the first and second observation data;
- performing an automatic analysis and evaluation of the observation data of the first and second monitoring sensors and generating control data;
- using the control data to control the workflow of the digital microscope, wherein the workflow comprises at least controlling the sample stage (04) and/or controlling the optics unit (02).

5. Method according to Claim 4, **characterized in that** the workflow comprises navigation on the sample, wherein by pointing at regions in the overview image and selecting a desired magnification, control data for displacing the sample stage and for setting the optics unit and for recording a microscope image are generated.

6. Method according to one of Claims 4 or 5, **characterized in that** the first observation data are provided for further processing in a digital programmable logic of the digital microscope.

7. Method according to one of Claims 5 to 6, furthermore comprising the following steps:
- using the first and second observation data for rough positioning of the sample stage (04) and/or
- using the first and second observation data for automatically setting a focus of the objective (01).

8. Method according to one of Claims 4 to 7, **characterized in that** furthermore the sample stage (04) is illuminated during the capturing of the observation data.

9. Data processing program for performing a method according to Claim 4 for controlling a workflow in a digital microscope according to Claim 1, which generates control data for controlling the sample stage and/or the optics unit of the digital microscope.

## Revendications

1. Microscope numérique comprenant
- une unité optique (02) et une unité de traitement d'image numérique, lesquelles sont disposées sur un support de microscope pivotant (03), et
- un capteur d'image de microscope destiné à capturer une image microscopique d'un échantillon (08) à disposer sur une platine d'échantillon (04),
- au moins un premier capteur de surveillance qui est conçu comme un capteur d'image (06) ou une caméra (41), destiné capturer une image d'ensemble bidimensionnelle (27) de l'échantillon (08) ;
- une unité de surveillance, des données du premier capteur de surveillance étant évaluées de manière automatisée dans l'unité de surveillance,
- un deuxième capteur de surveillance qui est un capteur d'image (06, 07, 08) ou une caméra (41), destiné à capturer une image d'ensemble, le premier capteur de surveillance et le deuxième capteur de surveillance étant disposés à des emplacements spatialement différents au niveau du microscope numérique,
**caractérisé en ce que**
- les données des deux capteurs de surveillance sont traitées dans l'unité de surveillance pour former des informations d'ensemble tridimensionnelles, lesquelles sont utilisées pour commander automatiquement un cycle d'opérations du microscope numérique, le cycle d'opérations comprenant au moins la commande de la platine d'échantillon (04) et/ou la commande de l'unité optique (02).

2. Microscope numérique selon la revendication 1, **caractérisé en ce qu'**il comprend un troisième capteur de surveillance, le premier capteur de surveillance et le troisième capteur de surveillance étant disposés à des emplacements spatialement différents au niveau du microscope numérique et les données des premier et troisième capteurs de surveillance étant traitées dans l'unité de surveillance pour former des informations de commande de collision et étant intégrées dans le cycle d'opérations du microscope numérique.

3. Microscope numérique selon l'une des revendications 1 et 2, **caractérisé en ce qu'**il comprend en outre un dispositif d'éclairage supplémentaire (21).

4. Procédé de commande d'un cycle d'opérations dans un microscope comprenant un capteur d'image de microscope destiné à capturer une image de microscope, une unité optique (02) et une caméra ou un capteur d'image comme premier capteur de surveillance, le procédé comprenant les étapes suivantes :
- capturer une première image d'ensemble d'un échantillon (08), disposé sur une platine d'échantillon (04), au moyen du premier capteur de surveillance ;
- capturer une deuxième image d'ensemble au moyen d'un deuxième capteur de surveillance, qui est disposé en étant spatialement décalé du premier capteur de surveillance dans le microscope numérique ;
- générer une image d'ensemble tridimensionnelle ou une carte de hauteur de l'échantillon à partir des premières et deuxièmes données d'observation ;
- analyser et évaluer automatiquement les données d'observation des premier et deuxième capteurs de surveillance et générer des données de commande ;
- utiliser des données de commande pour commander le cycle d'opérations du microscope numérique, le cycle d'opérations comprenant au moins la commande de la platine d'échantillon (04) et/ou la commande de l'unité optique (02).

5. Procédé selon la revendication 4, **caractérisé en ce que** le cycle d'opérations comprend la navigation sur l'échantillon, des données de commande étant générées par pointage sur des zones situées dans l'image d'ensemble et par sélection d'un grossissement souhaité pour déplacer la platine d'échantillon et pour régler l'unité optique et pour capturer une image de microscope.

6. Procédé selon l'une des revendications 4 et 5, **caractérisé en ce que** les premières données d'observation sont fournies pour un traitement ultérieur dans une logique programmable numérique du microscope numérique.

7. Procédé selon l'une des revendications 5 à 6, comprenant en outre les étapes suivantes :
- utiliser les premières et deuxièmes données d'observation pour un positionnement approximatif de la platine d'échantillon (04) et/ou
- utiliser les premières et deuxièmes données d'observation pour un réglage automatique d'un foyer de l'objectif (01).

8. Procédé selon l'une des revendications 4 à 7, **caractérisé en ce qu'**un éclairage de la platine d'échantillon (04) est également effectué lors de l'acquisition des données d'observation.

9. Programme de traitement de données destiné à mettre en œuvre un procédé selon la revendication 4 pour commander un cycle d'opérations dans un microscope numérique selon la revendication 1, lequel programme génère des données de commande pour commander la platine d'échantillon et/ou l'unité optique du microscope numérique.
